# EUROPÄISCHE PATENTSCHRIFT

(11) **EP 0 826 113 B1**
(45) Veröffentlichungstag und Bekanntmachung des Hinweises auf die Patenterteilung: **03.01.2001**
(21) Anmeldenummer: 97907072.9
(22) Anmeldetag: 05.03.1997
(51) Int. Cl.: F16D 65/097

(54) **TEILBELAGSCHEIBENBREMSE**
PART-LINED DISC BRAKE
FREIN A DISQUE A GARNITURE PARTIELLE

(30) Priorität: 18.03.1996 DE 19610611
(43) Veröffentlichungstag der Anmeldung: 04.03.1998
(60) Teilanmeldung: 99124666.1
(73) Patentinhaber: Lucas Industries Limited, London W1Y 4DJ (GB)
(72) Erfinder: LIEBER, Kristine, D-56337 Eitelborn (DE); WALDEN, Michael, Felix, Maria, D-56626 Andernach (DE)
(74) Vertreter: Schmidt, Steffen J., Dipl.-Ing.
(86) Internationale Anmeldenummer: EP9701107
(87) Internationale Veröffentlichungsnummer: WO9735121

(56) Entgegenhaltungen:
- GB-A- 2 114 243
- US-A- 4 429 769
- US-A- 4 607 728

## Beschreibung

Die vorliegende Erfindung betrifft eine Teilbelagscheibenbremse mit einem Bremsträger, an dem zwei im Abstand zueinander angeordnete Bremsbeläge gehaltert sind, die zwischen sich eine sich um eine Rotationsachse drehende Bremsscheibe aufnehmen, wobei die beiden Bremsbeläge mit der Bremsscheibe durch eine Zustellbewegung in Eingriff bringbar sind, und wenigstens einem Federelement, das zwei Federhälften mit je wenigstens einen Klemmabschnitt für jeden der Bremsbeläge aufweist, so daß die Bremsbeläge in einer zur Rotationsachse senkrechten Position gehalten sind, und bei dem die beiden Federhälften miteinander durch einen Steg verbunden sind.

Die erfindungsgemäße Teilbelagscheibenbremse ist insbesondere eine Schwimmsattel-Teilbelagscheibenbremse mit einer Niederhaltefeder, auch als Belaghaltefeder bezeichnet, welche die Bremsbeläge zuverlässig an Abstützungen des Bremsträgers beziehungsweise des Achsschenkels befestigt.

Aus der US-A-4 429 769 ist eine Schwimmsattelscheibenbremse mit einer Halteeinrichtung bekannt, an der zwei im Abstand zueinander angeordnete Reibklötze gehalten sind, die zwischen sich eine sich um eine Rotationsachse drehende Scheibe aufnehmen, wobei die beiden Reibklötze mit der Scheibe durch eine Zustellbewegung in Eingriff bringbar sind. Die Schwimmsattelscheibenbremse weist zwei Führungsplatten auf, die je einen Halteabschnitt für jeden der Reibklötze aufweisen, so daß die Reibklötze in einer zur Rotationsachse senkrechten Position gehalten sind. Dabei sind die beiden Halteabschnitte miteinander durch einen Querabschnitt verbunden. Der Querabschnitt bildet eine starre Verbindung zwischen den beiden Halteabschnitten, die je einen Vorsprung eines der Reibklötze umgreifen, so daß jeder Reibklotz in je einem Halteabschnitt der Führungsplatte verschiebbar ist. Dabei tritt zwischen den Halteabschnitten und den Reibklötzen Gleit- bzw. Haftreibung auf, so daß die Reibklötze nach einer Zustellbewegung in ihrer Lage verbleiben und an der Scheibe reiben können.

Die GB-A-2 114 243 beschreibt eine Scheibenbremsenanordnung mit einer Belaghaltefeder, die drei Federabschnitte aufweist. Ein erster Federabschnitt umgreif C-förmig einen Armabschnitt eines Achsschenkels. Ein zweiter Federabschnitt ist an je einem axialen Ende der Belaghaltefeder angeordnet, umgreift dort den Armabschnitt und hält somit die Belaghaltefeder in axialer Richtung. Der dritte Federabschnitt erstreckt sich vom ersten Federabschnitt aus radial nach innen und drängt einen eingesetzten Reibklotz zum Zentrum einer Bremsscheibe. Mittels den Belaghaltefedern ist ein die Reibklötze aufnehmender Sattel in den Armabschnitten in axialer Richtung der Bremsscheibe verschiebbar. Auch hier tritt das oben genannte Problem auf, daß die Reibung zwischen Belaghaltefeder und Reibklötzen überwunden werden muß, um die Reibklötze nach der Zustellbewegung auseinanderzuführen.

Aus der DE 1 775 586 C3 ist eine Teilbelagscheibenbremse mit einem Paar Seitenflächen, von denen mindestens je ein Abschnitt zur Übertragung von Bremskräften an einem tragenden Bremsenteil abstützbar ist, einem Paar Aussparungen, einem Paar Führungskörper, die in je einer der Aussparungen aufgenommen sind, und einer mit den Führungskörpern verbundenen Rückstellfederanordnungen bekannt. Dabei sind Führungskörper und Rückstellfederanordnung an einem gemeinsamen Halteblech für beide Bremsbeläge ausgebildet, das sowohl senkrecht zur Bremsscheibenebene als auch in Umfangsrichtung der Bremsscheibe gesehen um mehr als 90° nach innen verlaufende Abbiegungen aufweist. Die beiden parallel zur Bremsscheibenebene verlaufenden Abbiegungen sind in entsprechende Rillen eines Bremssattels eingerastet, und die beiden anderen, senkrecht zur Bremsscheibe verlaufenden Abbiegungen greifen als Führungskörper in seitliche Aussparungen der Bremsbeläge ein und sollen die herkömmlichen Haltestifte ersetzen. Die Rückstellfederanordnung ist von einer Blattfeder gebildet, die in ihrer Mitte mit dem Halteblech vernietet ist und symmetrisch dazu ein Paar S-förmig gebogener Federabschnitte aufweist. Mit diesen Federabschnitten übt die Blattfeder eine schräg nach unten und außen gerichtete Kraft auf eine Oberkante je eines der beiden Bremsbeläge aus, um diese nach jeder Bremsbetätigung von der Bremsscheibe wegzudrücken.

Aus der DE 79 31 220 U1 ist eine Scheibenbremse bekannt, die einen Bremsträger aufweist, in welchem mindestens ein Bremsbelag zur Bremsscheibe und von der Bremsscheibe weg verschiebbar angebracht ist. Der oder jeder Bremsbelag hat dabei einen Rückenplattenbereich, der sich an den beiden entgegengesetzten Seiten des Bremsbelags bis in die Nähe des Bremsträgers erstreckt. An diesem Rückenplattenbereich ist an den beiden entgegengesetzten Seiten eine Feder befestigt. Die Federn des bzw. jedes Bremsbelags erstrecken sich in Reibungseingriff mit dem Bremsträger, so daß bei einer Bewegung des oder jedes Bremsbelages zur Bremsscheibe die entsprechenden Federn belastet werden und beim Aufheben des Bremsdrucks dieser das Wegbewegen der Bremsbeläge von der Bremsscheibe bewirkt.

Durch die Forderungen nach Leichtbauweise und kostenreduzierten Baugruppen sowie einer schnellen Montage der Baugruppen durch den Automobilhersteller geht die Entwicklung dahin, daß aus mehreren kleineren Baugruppen, die oftmals von verschiedenen Lieferanten stammen und bisher beim Fahrzeughersteller zusammengesetzt wurden, vorab eine größere Baugruppe geschaffen wird, die dann beim Automobilhersteller montiert wird. Hierdurch kann die Montagezeit und der logistische Aufwand beim Fahrzeughersteller vermindert werden.

Durch den Zusammenschluß von kleineren Baugruppen kann oftmals auch die eine (größere) Baugruppe vereinfacht werden. Ein solcher Zusammenschluß von Baugruppen kann darin bestehen, daß der Achsschenkel und der Bremsträger als ein einziges Teil ausgebildet werden. Die Erfindung ist für eine derartige Integration des Bremsträgers mit dem Achsschenkel geeignet, aber nicht darauf beschränkt.

Bei einem derartigen Zusammenschluß kleinerer Baugruppen kann sich die Schwierigkeit ergeben, daß Kräfte von Federn, die die Bremsbeläge auf ihren Führungen hielten, nicht mehr in der bisher üblichen Weise aufgebracht werden können. Bei vom Achsschenkel getrenntem Schwimmsattel mit Bremsbelägen, fehlen die Arme des Bremsträgers, welche die Reaktionskräfte der Federn aufnehmen.

Wenn die Forderung besteht, daß die Unterbaugruppe dennoch möglichst den Schwimmsattel, die Bremsbeläge und die Federn vereinen soll, dann sind Anordnungen mit Federn, die Kräfte zwischen den Bremsbelägen und dem Bremssattel erzeugen, nicht mehr ohne weiteres verwendbar.

Auch kann das Abstützen der Federkräfte einerseits am Bremssattel und andererseits am Bremsträger die Verschiebbarkeit des Bremssattels erschweren, mit der Folge, daß die Bremsbeläge nach Lösen der Bremse in leichter Berührung mit der Bremsscheibe verbleiben.

Ausgehend von diesen bekannten Anordnungen liegt der Erfindung die Aufgabe zugrunde, eine Teilbelagscheibenbremse bereit zustellen, die die vorstehenden Schwierigkeiten beseitigt.

Dazu weist erfindungsgemäß die eingangs erwähnte Teilbelagscheibenbremse die Merkmale des Anspruchs 1 auf.

Der Erfindung liegt dabei die Erkenntnis zugrunde, daß das Federelement als zentrale Funktionen übernehmendes Bauteil auszubilden ist, das folgende Aufgaben erfüllt:
Das Federelement soll unter anderem
- an den Bremsbacken leicht befestigbar sein,
- mit den Bremsbacken eine zuverlässige Verbindung eingehen, aus der die Bremsbacken leicht herausnehmbar sind,
- keine Kräfte auf die Gleitführung des Schwimmsattels ausüben.

Darüberhinaus nutzt die Erfindung die Erkenntnis, daß zur Rotationsachse der Bremsscheibe parallele Bewegungen der Bremsbeläge an den Führungsflächen Kräfte erzeugen, die die den Bremsbelägen zugeordneten Federhälften aufeinander zubewegen. Die Bewegung der Federhälften zueinander verformt den Steg, der auf Biegung oder Beulung beansprucht wird und nach Entlastung der Bremse von hydraulischem Druck sich entspannt und die beiden Bremsbeläge von der Bremsscheibe auf das vorbestimmte Bremslüftspiel freischiebt.

Eine vorteilhafte Weiterbildung sieht vor, daß das Federelement wenigstens einen Verrastabschnitt aufweist, der das Federelement mit dem Bremsträger verrastet.

Erfindungsgemäß weist vorzugsweise jeder Klemmabschnitt des Federelementes einen U- oder V-förmigen Bügelabschnitt auf, bei dem ein zwischen zwei Schenkeln angeordneter Verbindungsbereich vorhanden ist, wobei die beiden Schenkel und der Verbindungsbereich so bemessen sind, daß der Klemmabschnitt einen Vorsprung des jeweiligen Bremsbelages umgreift.

Außerdem weist bei einer bevorzugten Ausführungsform jedes Federelement zwei Führungsflächen auf, die jeweils mit einem Klemmabschnitt verbunden sind, wobei aus jeder der Führungsflächen wenigstens eine Zunge abgewinkelt heraussteht, die den Verrastabschnitt bilden, der die Bremsbeläge mit dem Bremsträger verrastet.

Dazu kann jede Zunge ein freies Ende aufweisen, das von dem jeweiligen Klemmabschnitt soweit beabstandet ist, daß jeweils ein Arm des Bremsträgers zwischen dem Klemmabschnitt und dem freien Ende der Zunge eingespannt ist.

Das Federelement ist zweiteilig (und zu der Mittelebene der Bremsscheibe symmetrisch ausgestaltet), wobei der Steg so bemessen ist, daß die Bremsscheibe zwischen den beiden Führungsflächen Raum findet.

Weiterhin weist vorzugsweise jeder der Klemmabschnitte an der dem Steg abgewandten Außenseite einen Haltearm auf, der jeweils an einem Arm des Bremsträgers anliegt.

Zur Verbindung des Federelementes mit den Bremsbelägen weist vorzugsweise jeder der Klemmabschnitte an der der jeweiligen Führungsfläche abgewandten Seite einen Eingriffsabschnitt auf, der in eine entsprechenden Ausnehmung des jeweiligen Bremsbelages eingreift.

Der Bremsträger kann mit einem Achsschenkel integriert ausgeführt sein.

Die Erfindung betrifft auch ein Federelement, das die vorstehenden strukturellen Merkmale aufweist.

Weitere Merkmale, Eigenschaften und Vorteile werden anhand der nachstehenden Beschreibung eines Ausführungsbeispiels unter Bezugnahme auf die Zeichnung erläutert, in denen
- Fig. 1: die Draufsicht auf eine, um 180° gedrehte Scheibenbremse zeigt,
- Fig. 2: eine teilweise geschnittene Seitenansicht der Scheibenbremse gemäß Fig. 1 zeigt,
- Fig. 3: eine perspektivische Vorderansicht eines Federelementes für die Scheibenbremse gemäß Fig. 1 zeigt,
- Fig. 4: eine perspektivische Rückansicht des Federelementes gemäß Fig. 3 zeigt,
- Fig. 5: das Federelement gemäß Fig. 3 in Vorderansicht zeigt,
- Fig. 6: das Federelement gemäß Fig. 3 in Seitenansicht zeigt,
- Fig. 7: das Federelement gemäß Fig. 3 in Draufsicht zeigt,
- Fig. 8: die perspektivische Ansicht des Federelementes gemäß Fig. 3 zeigt,
- Fig. 9: eine teilweise geschnittene Vorderansicht der Scheibenbremse gemäß Fig. 1 während der Montage des Schwimmsattels zeigt, und
- Fig. 10: den Schwimmsattel gemäß Fig. 9, nachdem er an den Abstützarmen montiert ist, zeigt.

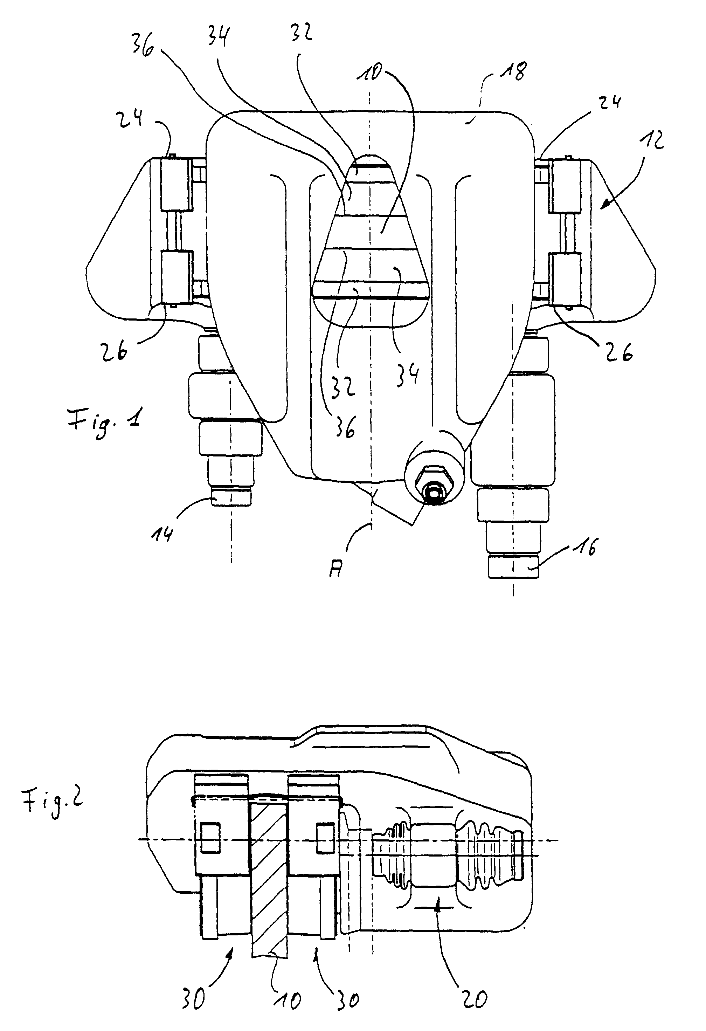

Die dargestellte Teilbelag-Scheibenbremse ist einer Bremsscheibe 10 zugeordnet, deren Drehachse A in Fig. 1 angedeutet ist. Die Bremse hat ein tragendes Bremsenteil, das im folgenden als Bremsträger 12 bezeichnet ist. Dieser Bremsträger 12 kann mit einem Achsschenkel integriert sein und umgreift im Einbauzustand die Bremsscheibe 10. Parallel zur Achse A ist am Bremsträger 12 ein Paar Führungsbolzen 14, 16 angeordnet, an denen ein Bremssattel 18 verschiebbar geführt ist.

Der Bremssattel 18 umgreift die Bremsscheibe 10 ebenfalls und weist an seiner in Bezug auf das Fahrzeug inneren Seite eine hydraulische Betätigungsvorrichtung 20 auf. Der Bremssattel 18 kann sich auf diesen Führungen parallel zur Bremsscheibenachse verschieben. Die Führungsbolzen 14, 16 sind von allgemein bekannter Art, wobei die Hauptführung 16 den Schwimmsattel parallel ausrichtet und die Nebenführung 14 ein Schwenken des (Schwimm-)bremssattels 18 um die Achse der Hauptführung 16 verhindert.

An dem Bremsträger 12 sind beiderseits der Bremsscheibe 10 parallel zu dieser voneinander abgewandte Oberflächen 24 bzw. 26 ausgebildet. Im rechten Winkel dazu weist der Bremsträger 12 beiderseits der Bremsscheibe 10 je ein Paar einander zugewandter paralleler Führungsflächen 28 auf, zwischen denen je ein Bremsbelag 30 angeordnet ist.

Jeder Bremsbelag 30 hat eine Rückenplatte 32, beispielsweise aus Stahl, und einen Reibbelag 34 mit einer Belagfläche 36, die im Einbauzustand auch bei unbetätigter Bremse ständig parallel zur Bremsscheibe 10 und somit im rechten Winkel zu deren Achse A gehalten werden soll. Seitlich ist jede Rückenplatte 32 durch ein Paar paralleler Seitenflächen 40 begrenzt, die im Betrieb Bremskräfte je nach Drehrichtung der Bremsscheibe 10 über die eine oder andere Führungsfläche 28 auf den Bremsträger 12 übertragen.

Zwischen dem Bremsträger 12 und jedem der beiden Bremsbeläge 30 ist an beiden Stirnseiten der Bremsbeläge 30 je ein Federelement 50 eingespannt. Durch die Federelemente 50 werden die beiden Bremsbeläge 30 in Richtung auf die Rotationsachse A der Bremsscheibe 10 hin gedrängt. Außerdem bewirken die Federelemente 50, daß nach einer Bremsbewegung (durch eine auf die Bremsbeläge 30 wirkende Zustellbewegung der Betätigungsvorrichtung 20), die Bremsbeläge 30 wieder von der Bremsscheibe 10 wegbewegt werden.

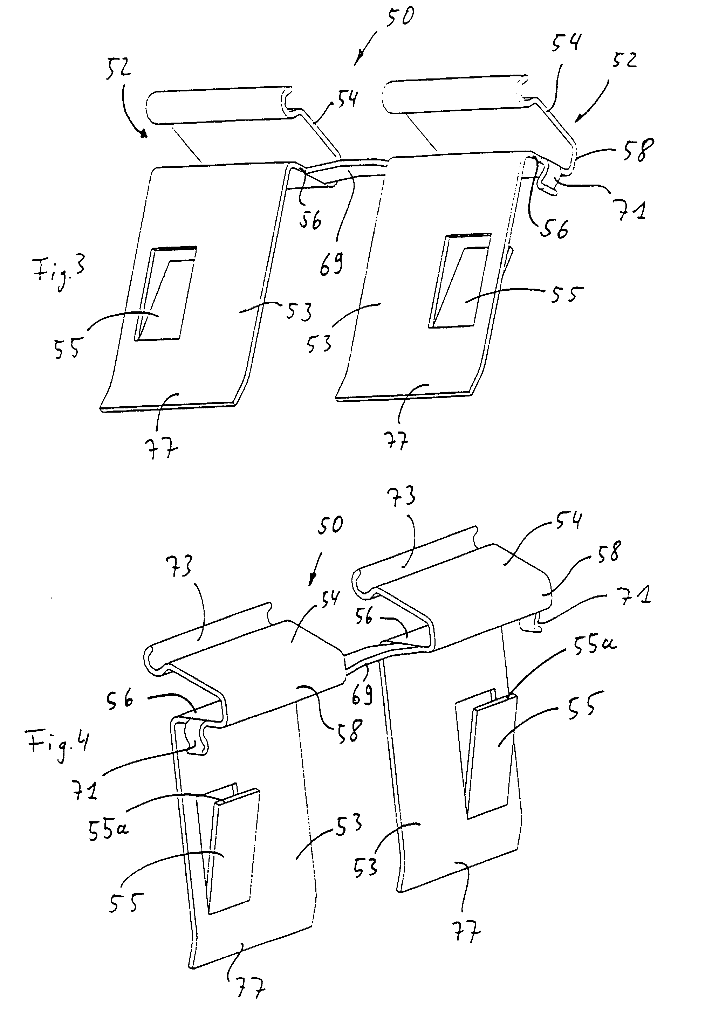

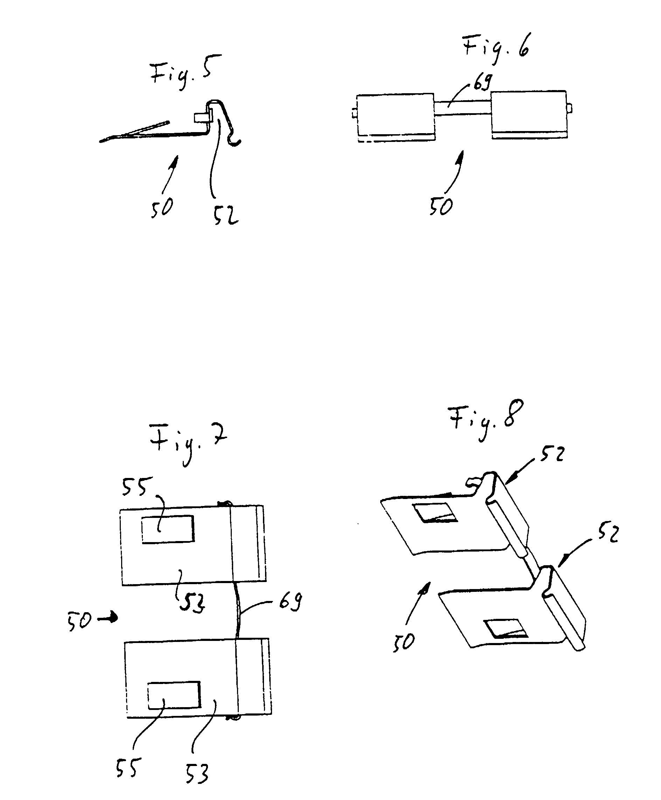

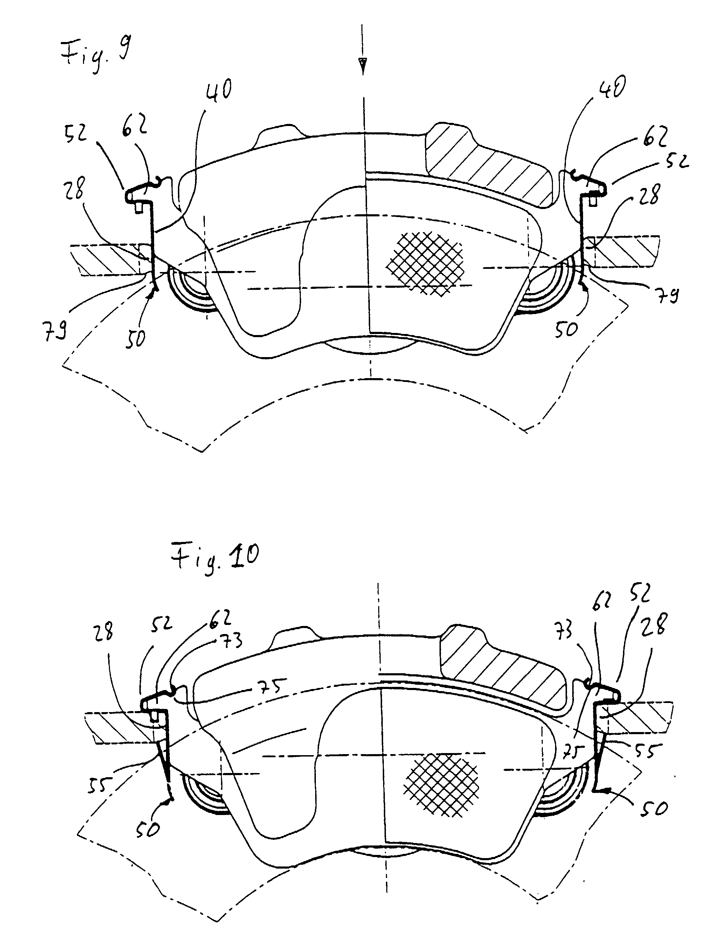

Zur Erläuterung der Gestalt des Federelementes 50, dessen Montage zwischen dem Bremsträger 12 und den beiden Bremsbelägen 30 sowie des Zusammenwirkens zwischen dem Federelement 50, dem Bremsträger 12 und den beiden Bremsbelägen 30 wird auf die Fig. 3 bis 10 nachstehend Bezug genommen.

Das Federelement 50 weist zwei nebeneinander angeordnete U- oder V-förmige Klemmabschnitte 52 auf (siehe Fig. 3,4,5). Jeder dieser Klemmabschnitte 52 hat zwei Schenkel 54, 56, die durch einen Verbindungsbereich 58 miteinander verbunden sind.

Jeder der beiden Klemmabschnitte 52 ist für jeweils einen der Bremsbeläge 30 vorgesehen, um die Bremsbeläge 30 in einer zur Rotationsachse (A) der Bremsscheibe 10 senkrechten Position zu halten. Dies wird dadurch erreicht, daß die beiden Schenkel 54, 56 und der Verbindungsbereich 58 so bemessen sind, daß jeder Klemmabschnitt 52 einen Vorsprung 62 des jeweiligen Bremsbelages 30 umgreift.

Des weiteren weist jedes Federelement 50 zwei Führungsflächen 53 auf, die jeweils mit einem Klemmabschnitt 52 einstückig verbunden sind. Aus jeder der Führungsflächen 53 steht eine Zunge 55 abgewinkelt heraus, die den Verrastabschnitt bildet, der die Bremsbeläge 30 mit dem Bremsträger 12 verrastet.

Im einzelnen wird dies dadurch erzielt, daß jede Zunge 55 ein freies Ende 55a aufweist, das von dem jeweiligen Klemmabschnitt 52 soweit beabstandet ist, daß jeweils ein Arm 28 des Bremsträgers 12 zwischen dem Klemmabschnitt 52 und dem freien Ende 55a der Zunge 55 eingespannt ist.

Die beiden Führungsflächen 53 sind miteinander durch einen Steg 69 verbunden, dessen Länge so bemessen ist, daß die Bremsscheibe zwischen den beiden Führungsflächen 55 Raum findet, wobei der Steg 69 vorzugsweise an den jeweiligen Schenkeln 56 der beiden Klemmabschnitte 52 einstückig angeformt ist.

Jeder der Klemmabschnitte 52 weist an der dem Steg 69 abgewandten Außenseite einen S-förmigen federnden Haltearm 71 auf, der so gestaltet ist, daß er im montierten Zustand der Bremse jeweils an einem Arm 28 des Bremsträgers 12 anliegt.

In der Verlängerung der Zungen 55 weisen die beiden Führungsflächen 53 Abwinklungen 77 auf, durch die die Führungsflächen 53 in die entgegengesetzte Richtung auslaufen, wie die Zungen 55 weisen.

Die Rückenplatten 32 weisen ein- und auslaufseitige Ansätze 62 auf, in die Ausnehmungen 75 eingearbeitet sind.

Außerdem weist jeder der Klemmabschnitte 52 an der der jeweiligen Führungsfläche 53 abgewandten (im montierten Zustand oberen) Seite einen Eingriffsabschnitt 73 auf, der in die jeweilige entsprechende Ausnehmung 75 des jeweiligen Bremsbelages 30 federnd und formschlüssig eingreift, so daß die beiden Bremsbeläge 30 durch die beiden Klemmabschnitte 52 und die Eingriffsabschnitte 73 in vorbestimmter Position zueinander und mit dem Federelement 50 gehalten sind. Die Eingriffsabschnitte 73 und die entsprechenden Ausnehmungen 75 sind so gestaltet, daß eine Verschiebung der Bremsbeläge 30 in zu der Rotationsachse der Bremscheibe 10 paralleler Richtung erlauben.

Die Fig. 9 und 10 veranschaulichen die Montage. Die Federelemente 50 werden mit den Klemmabschnitten 52 auf die Ansätze 62 der Rückenplatten 32 aufgeschoben. Dabei rasten die Eingriffsabschnitte 73 in die Ausnehmungen 75 ein. Die Bremsbeläge 30 werden in den Schwimmsattel eingelegt und durch eine nicht weiter veranschaulichte Haltevorrichtung in dieser Lage vorläufig gehalten.

Zur Montage dieser Baueinheit auf dem als Achsschenkel ausgebildeten Bremsträger 12 wird der Schwimmsattel 18 mit den Bremsbelägen 30 und den beiden Federelementen 50 radial zur Rotationsachse (A) der Bremsscheibe 10 auf den Achsschenkel (bzw. den Bremsträger 12) geschoben. Dabei ermöglichen die Abwinklungen 77 der Federelemente 50 ein leichtes Einführen der Baueinheit zwischen die Abstützungen des Achsschenkels.

Kurz bevor die unteren Schenkel 56 der Klemmabschnitte 52 den oberen Rand der Arme 28 des Bremsträgers 12 erreichen, beginnen die federnden Zungen 55 sich aus der Ebene der seitlichen Führungsflächen 53 herauszubewegen. Sie schleifen dabei entlang den angeschrägten unteren Rändern 79 der Arme 28. Dadurch werden die Bremsbeläge 30 zuverlässig auf die Arme des Achsschenkels gezogen.

Die Lagesicherung der Federelemente 50 in axialer Richtung, - axial bezogen auf die Rotationsachse (A) - an dem Achsschenkel wird durch die Haltearme 71 erreicht.

Während des Bremsvorganges gleiten die Bremsbeläge 30 entlang der seitlichen Führungsflächen 53 und leiten auch über die Führungsflächen 53 die Umfangskräfte in den Bremsträger 12 bzw. den Achsschenkel ein. Des weiteren werden die Bremsbeläge 30 in den durch die oberen und unteren Schenkel 54, 56 gebildeten Nuten geführt und gehalten.

Die Federelemente 50 bestehen vorzugsweise aus nichtrostendem Werkstoff. Hierdurch wird ein Festrosten der Belagträgerplatten in den Abstützungen des Achsschenkels vermieden. Weiterhin wird durch die Verwendung eines nichtrostenden Werkstoffes die Wiederverwendung bei Austausch, Erneuerung der verschlissenen Bremsbeläge ermöglicht, sofern die Federelemente 50 nicht zu sehr beansprucht sind oder durch Hitzeeinwirkung verbraucht sind.

Die zur Rotationsachse (A) parallelen Bewegungen der Bremsbeläge erzeugen an den Führungsflächen Kräfte, die die den Bremsbelägen zugeordneten Federhälften aufeinander zuzubewegen bestrebt sind. Die Bewegung der Federhälften zueinander verformt den Steg. Dieser wird dabei auf Biegung oder Beulung beansprucht. Nach Entlastung der Bremse von hydraulischem Druck entspannt sich der Steg und schiebt beide Bremsbeläge von der Bremsscheibe frei auf das vorbestimmte Bremslüftspiel. Die beiden Hälften der Federelemente 50 werden hauptsächlich durch die Reibung der Ansätze 62 in den durch die oberen und unteren Schenkel 54, 56 gebildeten Nuten aufeinander zueinanderbewegt, wenn die Bremsbeläge aufeinander zu bewegt werden.

Die beim Fahren verursachten Erschütterungen erzeugen zur Bremsscheibenachse radial nach außen gerichtete Beschleunigungskräfte der Bremsbeläge. Diese Kräfte werden zuverlässig mittels der federnden Zungen 55 in die Arme des Achsschenkels 12 eingeleitet. Alle anderen Kraftkomponenten werden direkt in den Achsschenkel 12 geleitet, also ohne die Federelemente 50 als ganzes auf Biegung oder Beulung zu beanspruchen.

Zum Auswechseln verschlissener Bremsbeläge 30 werden die Befestigungsschrauben der Führungsbolzen gelöst. Dann wird der Schwimmsattel von dem Achsschenkel 12 abgehoben. Die Bremsbeläge 30 können nun parallel zur Rotationsachse (A) herausgezogen werden.

Neue Bremsbeläge werden dann ebenfalls parallel zur Rotationsachse (A) von der Seite her eingeschoben. Der Schwimmsattel wird aufgelegt und die Führungsbolzen werden wieder festgeschraubt.

Das Anschrauben des Schwimmsattels ist einfach, da lediglich der Schwimmsattel so auszurichten ist, daß die Gewindebohrungen im Achsschenkel mit den Führungsbolzen übereinstimmen.

Während des Ausrichtens braucht lediglich die Gewichtskraft des Schwimmsattels ausbalanciert zu werden, es müssen also keine zusätzlichen Kräfte oder deren in verschiedene Richtungen wirkende Komponenten ausbalanciert werden, wie dies oftmals durch herkömmliche Federelemente, die sich an dem Schwimmsattel abstützen, hervorgerufen wird.

Grundsätzlich kann eine Niederhaltefeder dieser Art auch bei Bremsen mit einem Bremsträger verwendet werden.

Durch die Erfindung können also die Bremsbeläge mit Federelementen, die keine Kräfte auf den Schwimmsattel ausüben, versehen werden. Die Konstruktion ist insbesondere für Bremsen vorgesehen, bei denen die Umfangskräfte direkt, also ohne Bremsträger, in den Achsschenkel eingeleitet werden.

## Patentansprüche

1. Teilbelagscheibenbremse mit
- einem Bremsträger (12), an dem zwei im Abstand zueinander angeordnete Bremsbeläge (30) gehaltert sind, die zwischen sich eine sich um eine Rotationsachse (A) drehende Bremsscheibe (10) aufnehmen, wobei die beiden Bremsbeläge (30) mit der Bremsscheibe (10) durch eine Zustellbewegung in Eingriff bringbar sind, und
- wenigstens einem Federelement (50)
-- das zwei Federhälften mit je wenigstens einem Klemmabschnitt (52) für jeden der Bremsbeläge (30) aufweist, so daß die Bremsbeläge (30) in einer zur Rotationsachse (A) senkrechten Position gehalten sind, und bei dem
-- die beiden Federhälften miteinander durch einen Steg (69) verbunden sind, dadurch gekennzeichnet, daß
der Steg (69) so bemessen ist, und jeder Klemmabschnitt (52) und der zugehörige Bremsbelag (30) derart gestaltet sind, daß zwischen der Bremsbelägen (30) und den jeweiligen Klemmabschnitten (52) Reibung induziert wird, durch die bei einer Zustellbewegung der Bremsbeläge (30) der Steg sich verformt und die Bremsbeläge (30) nach einer Zustellbewegung wieder voneinander wegbewegt.

2. Teilbelagscheibenbremse nach Anspruch 1, dadurch gekennzeichnet, daß
- an dem Bremsträger (12) ein Bremssattel (18) angeordnet ist, der die Bremsbeläge (30) und die Bremsscheibe (10) übergreift und in der Bewegungsrichtung der Bremsbeläge (30) durch eine Betätigungsvorrichtung (20) gegenüber dem Bremsträger (12) verschiebbar ist, wobei die Betätigungsvorrichtung (20) die Zustellbewegung der Bremsbeläge (30) bewirkt, und die Bremsbeläge (30) mit dem Bremssattel (18) eine Baueinheit bilden, und
- das Federelement (50) wenigstens einen Verrastabschnitt (55) aufweist, der das Federelement (50) bei zur Rotationsachse (A) radialer Montage der Baueinheit mit dem Bremsträger (12) verrastet.

3. Teilbelagscheibenbremse nach Anspruch 1 oder 2, dadurch gekennzeichnet, daß
- jeder Klemmabschnitt (52) des Federelementes (50) einen U- oder V-förmigen Bügelabschnitt aufweist, bei dem ein zwischen zwei Schenkeln (54, 56) angeordneter Verbindungsbereich (58) vorhanden ist, wobei die beiden Schenkel und der Verbindungsbereich so bemessen sind, daß der Klemmabschnitt (52) einen Vorsprung (62) des jeweiligen Bremsbelages (30) umgreift.

4. Teilbelagscheibenbremse nach Anspruch 2 oder 3, dadurch gekennzeichnet, daß
- jedes Federelement (50) zwei Führungsflächen (53) aufweist, die jeweils mit dem Klemmabschnitt (52) verbunden sind, wobei aus jeder der Führungsflächen (53) wenigstens eine Zunge (55) abgewinkelt heraussteht, die den Verrastabschnitt bilden, der die Bremsbeläge (30) mit dem Bremsträger (12) verrastet.

5. Teilbelagscheibenbremse nach Anspruch 4, dadurch gekennzeichnet, daß
- jede Zunge (55) ein freies Ende (55a) aufweist, das von dem jeweiligen Klemmabschnitt (52) soweit beabstandet ist, daß jeweils ein Arm (28) des Bremsträgers (12) zwischen dem Klemmabschnitt (52) und dem freien Ende (55a) der Zunge (55) eingespannt ist.

6. Teilbelagscheibenbremse nach Anspruch 4 oder 5, dadurch gekennzeichnet, daß der Steg (69) so bemessen ist, daß die Bremsscheibe zwischen den beiden Führungsflächen (53) Raum findet.

7. Teilbelagscheibenbremse nach Anspruch 1, 2, 3, 4, 5 oder 6, dadurch gekennzeichnet, daß
- jeder der Klemmabschnitte (52) an der dem Steg (69) abgewandten Außenseite einen Haltearm (71) aufweist, der jeweils an einem Arm (28) des Bremsträgers (12) anliegt.

8. Teilbelagscheibenbremse nach Anspruch 4, 5 oder 6, dadurch gekennzeichnet, daß
- jeder der Klemmabschnitte (52) an der der jeweiligen Führungsfläche (53) abgewandten Seite einen Eingriffsabschnitt (73) aufweist, der in eine entsprechenden Ausnehmung (75) des jeweiligen Bremsbelages (30) eingreift.

9. Teilbelagscheibenbremse nach einem der Ansprüche 1 - 8, dadurch gekennzeichnet, daß
- der Bremsträger (12) mit einem Achsschenkel integriert ausgeführt ist.

10. Federelement für eine Teilbelagscheibenbremse mit zwei nebeneinander angeordneten Klemmabschnitten (52) für je einen Bremsbelag (30), wobei
- die beiden Klemmabschnitte (52) miteinander durch einen Steg (69) verbunden sind,
dadurch gekennzeichnet, daß
- der Steg (69) so bemessen ist, daß er sich durch eine Zustellbewegung der Klemmabschnitte (52) verformt und er nach einer Zustellbewegung die Klemmabschnitte (52) wieder voneinander wegbewegt.

11. Federelement nach Anspruch 10, dadurch gekennzeichnet, daß
- jeder Klemmabschnitt (52) einen U- oder V-förmigen Bügelabschnitt aufweist, bei dem ein zwischen zwei Schenkeln (54, 56) angeordneter Verbindungsbereich (58) vorhanden ist.

12. Federelement nach Anspruch 10 oder 11, dadurch gekennzeichnet, daß
- das Federelement (50) zwei Führungsflächen (53) aufweist, die jeweils mit dem Klemmabschnitt (52) verbunden sind, wobei aus jeder der Führungsflächen (53) wenigstens eine Zunge (55) abgewinkelt heraussteht, die einen Verrastabschnitt zum Verrasten mit einem Bremsträger (12) bildet.

13. Federelement nach Anspruch 10, 11 oder 12, dadurch gekennzeichnet, daß
- jeder der Klemmabschnitte (52) an der dem Steg (69) abgewandten Außenseite einen Haltearm (71) zum Anliegen an einem Bremsträger (12) aufweist.

14. Federelement nach Anspruch 12 oder 13, dadurch gekennzeichnet, daß
- jeder der Klemmabschnitte (52) an der der jeweiligen Führungsfläche (53) abgewandten Seite einen Eingriffsabschnitt (73) zum Eingreifen in eine entsprechenden Ausnehmung (75) eines Bremsbelages (30) aufweist.

## Claims

1. A spot-type disc brake, comprising
- a brake support (12) at which two brake linings (30) which are arranged at a spaced relationship to each other are secured and which accommodate between them a brake disc (10) that rotates about an axis of rotation (A), the two brake linings (30) being adapted to be brought into engagement with the brake disc (10) by means of a feed motion, and
- at least one spring element (50),
-- comprising two spring halves with at least one clamping section (52) each for each of the brake linings (30) so that the brake linings (30) are held in a position normal to the axis of rotation (A), and wherein
-- the two spring halves are connected with each other by a web (69), characterised in that
the web (69) is dimensioned and each clamping section (52) and the associated brake lining (30) are designed in such a manner that friction is induced between the brake linings (30) and the respective clamping sections (52) by means of which the web is deformed during a feed motion of the brake linings (30) and the brake linings (30) are again moved away from each other after a feed movement.

2. The spot-type disc brake according to claim 1,
characterised in that
- a brake caliper (18) is arranged on the brake support (12) which brake caliper (18) straddles the brake linings (30) and the brake disc (10) and is slidable in the direction of movement of the brake linings (30) relative to the brake support (12) by means of an actuation device (20), the actuating device (20) effecting the feed movement of the brake linings (30) and the brake linings (30) forming a structural unit with the brake caliper (18), and
- the spring element (50) comprises at least one locking section (55) which locks the spring element (50) with the brake support (12) with the structural unit being mounted radially relative to the axis of rotation (A).

3. The spot-type disc brake according to Claim 1 or 2,
characterised in that
- each clamping section (52) of the spring element (50) comprises a U-shaped or V-shaped yoke section with a connecting area (58) arranged between two legs (54, 56) being provided, the two legs and the connecting area being dimensioned in such a manner that the clamping section (52) encompasses a protrusion (62) of the respective brake lining (30).

4. The spot-type disc brake according to Claim 2 or 3,
characterised in that
- each spring element (50) comprises two guide surfaces (53) each of which is connected with the clamping section (52), with at least one tongue (55) protruding under an angle from each of the guide surfaces (53) which forms the locking section locking the brake linings (30) with the brake support (12).

5. The spot-type disc brake according to Claim 4, characterised in that
- each tongue (55) comprises a free end (55a) which has such a distance from the respective clamping section (52) that one link (28) each of the brake support (12) is clamped between the clamping section (52) and the free end (55a) of the tongue (55).

6. The spot-type disc brake according to Claim 4 or 5,
characterised in that
- the web (69) is dimensioned in such a manner that the brake disc has sufficient space between the two guide surfaces (53).

7. The spot-type disc brake according to Claim 1, 2, 3, 4, 5 or 6, characterised in that
- each of the clamping sections (52) comprises a holding arm (71) at the outer surface facing away from the web (69), which holding arm (71) abuts one link (28) of the brake support (12) in each case.

8. The spot-type disc brake according to Claim 4, 5 or 6,
characterised in that
- each of the clamping sections (52) comprises an engagement section (73) at the side facing away from the respective guide surface (53), which engages into a corresponding recess (75) of the respective brake lining (30).

9. The spot-type disc brake according to one of Claims 1 to 8, characterised in that
- the brake support (12) is designed as an integral component with a steering swivel.

10. A spring element (50) for a spot-type disc brake having two clamping sections (52) arranged side by side for one brake lining (30) each, wherein
- the two clamping sections (52) are connected with each other by a web (69),
characterised in that
- the web is dimensioned in such a manner that it is deformed upon a feed movement of the clamping sections and moves the clamping sections (52) again away from each other after a feed movement.

11. The spring element according to Claim 10, characterised in that
- each clamping section (52) comprises a U-shaped or V-shaped yoke section with a connecting area arranged between two legs (54, 56) being provided.

12. The spring element according to claim 10 or 11,
characterised in that
- the spring element (50) comprises two guide surfaces (53) each of which is connected with the clamping section (52), at least one tongue (55) projecting in bent manner from each of the guide surfaces (53) which tongue (55) forms a locking section for locking with a brake support (12).

13. The spring element according to claim 10, 11 or 12,
characterised in that
- each one of the clamping sections (52) comprises a holding arm (71) on the side facing away from the web (69) for resting against a brake support (12).

14. The spring element according to claim 12 or 13,
characterised in that
- each one of the clamping sections (52) is provided with an engagement section (73) on the side facing away from the respective guide surface (53) for engaging into a corresponding recess (75) in a brake lining (30).

## Revendications

1. Frein à disque à garniture partielle comprenant
- un support de frein (12) sur lequel sont fixées deux garnitures de frein (30) disposées espacées l'une de l'autre, qui reçoivent entre elles un disque de frein (10) tournant autour d'un axe de rotation (A), les deux garnitures de frein (30) pouvant être appliquées contre le disque de frein (10) par un mouvement d'avance, et
- au moins un élément élastique (50)
-- qui présente deux moitiés élastiques comprenant chacune au moins une portion de pince (52) pour chacune des garnitures de frein (30) de telle façon que les garnitures de frein (30) soient maintenues dans une position perpendiculaire à l'axe de rotation (A), et dans lequel
-- les deux moitiés élastiques sont reliées entre elles par une barrette (69), caractérisé en ce que
la barrette (69) est dimensionnée de telle façon et chaque portion de pince (52) et la garniture de frein (30) associée sont configurées de telle façon qu'un certain frottement soit induit entre les garnitures de frein (30) et les portions de pince (52) respectives sous l'effet duquel la barrette se déforme lors d'un mouvement d'avance des garnitures de frein (30) et la barrette éloigne à nouveau les garnitures de frein (30) l'une de l'autre après un mouvement d'avance.

2. Frein à disque à garniture partielle selon la revendication 1, caractérisé en ce que
- un étrier de frein (18) est associé au support de frein (12), qui chevauche les garnitures de frein (30) et le disque de frein (10) et peut être déplacé par rapport au support de frein (12) par un dispositif d'actionnement (20) dans la direction du mouvement des garnitures de frein (30), le dispositif d'actionnement (20) réalisant le mouvement d'avance des garnitures de frein (30) et les garnitures de frein (30) formant avec l'étrier de frein (18) une unité constitutive, et
- l'élément élastique (50) présentant au moins une portion d'enclenchement (55) qui enclenche, lors d'un montage radial par rapport à l'axe de rotation (A) de l'unité constitutive, l'élément élastique (50) avec le support de frein (12).

3. Frein à disque à garniture partielle selon la revendication 1 ou 2, caractérisé en ce que
- chaque portion de pince (52) de l'élément élastique (50) présente une portion cintrée en forme de U ou de V dans laquelle se trouve une zone de raccordement (58) disposée entre deux branches (54, 56), les deux branches et la zone de raccordement étant dimensionnées de telle façon que la portion de pince (52) entoure une partie en saillie (62) de la garniture de frein (30) respective.

4. Frein à disque à garniture partielle selon la revendication 2 ou 3, caractérisé en ce que
- chaque élément élastique (50) présente deux surfaces de guidage (53) qui sont respectivement reliées à la portion de pince (52), au moins une languette (55) faisant saillie de chacune des surfaces de guidage (53) en faisant un angle avec celle-ci, qui forme la portion d'enclenchement qui enclenche les garnitures de frein (30) avec le support de frein (12).

5. Frein à disque à garniture partielle selon la revendication 4, caractérisé en ce que
- chaque languette (55) présente une extrémité libre (55a) qui est à une distance telle de la portion de pince (52) correspondante qu'un bras (28) respectif du support de frein (12) soit encastré entre la portion de pince (52) et l'extrémité libre (55a) de la languette (55).

6. Frein à disque à garniture partielle selon la revendication 4 ou 5, caractérisé en ce que la barrette (69) est dimensionnée de telle façon que le disque de frein trouve place entre les deux surfaces de guidage (53).

7. Frein à disque à garniture partielle selon la revendication 1, 2, 3, 4, 5 ou 6, caractérisé en ce que la barrette est dimensionnée de telle façon que
- chacune des portions de pince (52) présente sur son côté extérieur opposé à la barrette (69) un bras de retenue (71) qui s'applique contre un bras (28) respectif du support de frein (12).

8. Frein à disque à garniture partielle selon la revendication 4, 5 ou 6, caractérisé en ce que
- chacune des portions de pince (52) présente du côté opposé à la surface de guidage (53) respective une portion d'engagement (73) qui pénètre dans un évidement (75) correspondant de la garniture de frein (30) respective.

9. Frein à disque à garniture partielle selon l'une quelconque des revendications 1 à 8, caractérisé en ce que
- à chaque support de frein (12) est intégrée une fusée d'essieu.

10. Elément élastique pour un frein à disque à garniture partielle comprenant deux portions de pince (52) disposées l'une à côté de l'autre, chacune pour une garniture de frein (30), dans lequel
- les deux portions de pince (52) sont reliées entre elles par une barrette (69),
caractérisé en ce que
- la barrette (69) est dimensionnée de telle façon qu'elle se déforme sous l'effet d'un mouvement d'avance des portions de pince (52) et qu'elle éloigne à nouveau l'une de l'autre les portions de pince (52) après un mouvement d'avance.

11. Elément élastique selon la revendication 10, caractérisé en ce que
- chaque portion de pince (52) présente une portion cintrée en forme de U ou de V dans laquelle il y a une zone de raccordement (58) disposée entre deux branches (54, 56).

12. Elément élastique selon la revendication 10 ou 11, caractérisé en ce que
- l'élément élastique (50) présente deux surfaces de guidage (53) qui sont respectivement reliées à la portion de pince (52), au moins une languette (55) faisant saillie de chacune des surfaces de guidage (53) en faisant un angle avec celle-ci, qui forme une portion d'enclenchement pour s'enclencher avec un support de frein (12).

13. Elément élastique selon la revendication 10, 11 ou 12, caractérisé en ce que
- chacune des portions de pince (52) présente sur son côté extérieur opposé à la barrette (69) un bras de retenue (71) destiné à s'appliquer contre un support de frein (12).

14. Elément élastique selon la revendication 12 ou 13, caractérisé en ce que
- chacune des portions de pince (52) présente sur son côté opposé à la surface de guidage (53) respective une portion d'engagement (73) destinée à pénétrer dans un évidement (75) correspondant d'une garniture de frein (30).
